# EUROPEAN PATENT APPLICATION

(11) **EP 1 213 662 A1**
(43) Date of publication of application: **12.06.2002**
(21) Application number: 00403457.5
(22) Date of filing: 07.12.2000
(51) Int. Cl.: G06F 17/30

(54) **Web browsing device, a related method and related software module**

(71) Applicant: ALCATEL, 75008 Paris (FR)
(72) Inventor: Van Doorselaer, Bart Alfons Peter, 9090 Melle (BE); Bauwens, Bart Gustaaf Maria, 1930 Zaventem (BE)
(74) Representative: Narmon, Gisèle

(57) **Abstract**

The present invention relates to a web browsing method for selecting a specific hyperlink from a set of hyperlinks that are included in a hyper-document. Each hyperlink of this set refers to a web resource. A first step is the holding for a specific hyperlink an association of a specific hyperlink with a corresponding description and a belonging user direct select action. Subsequently for each specific hyperlink, the next step is presenting the hyperlink together with the corresponding description and the user direct select action. An activation of such a user direct select action is detected and based on the activation of the user direct select action a specific hyperlink from the association holding part is determined.

An additional step of the browsing method is the updating of an association by assigning another specific hyperlink and corresponding description to a user direct select action.

## Description

The present invention relates to a web-browsing device as described in the preamble of claim 1, a related method as described in the preamble of claim 5 and a related software module as described in the preamble of claim 9.

Such a web-browsing device is already known in the art, e.g. from International Patent Application WO 9729414, *"METHOD AND APPARATUS FOR PASSIVELY BROWSING THE INTERNET "*.

Therein, a browsing method and device is described where accessing web-pages typically involves browsing through web pages by clicking on hypertext-links using for instance a mouse or trackball. Moving the selection of a hyperlink back and forth via keys is very time-consuming, and not always possible, for instance if no keyboard is available. Further, moving the pointer and clicking on one of the mouse buttons is not always convenient either because it takes too much time to move the mouse and position the pointer, and additionally the repetitive character of the mouse movements may cause stress in wrist and elbows. Besides, some accuracy is needed for pointing to the correct hyperlink. Moreover, there is a need for a smooth surface to move the mouse on which is not always available.

An object of the present invention is to provide a web-browsing device and a related method of the above known type but wherein the hyperlink selection is performed in a more efficient, convenient and faster way compared to the browsing device known in the art.

According to the invention, this object is achieved by the device as described in claim 1, the method as described in claim 5 and the software module as described in claim 9.

Indeed, by holding for a specific hyperlink from a set of hyperlinks, an association of the hyperlink with a corresponding description and a user direct select action and additionally presenting this association to the user, the user is enabled to select such a specific hyperlink via the corresponding direct user select action in a easy and direct way, instead of selecting the hyperlink using the mouse. The browsing device detects a user direct select action and determines the selected hyper link from the associations held by the association holding part based on the user direct select action. It is to be noted that such set of hyperlinks may exist of any number of hyperlinks including the situation that the set consist of only one hyperlink.

Another characteristic feature of the present invention is described in appended claim 2, claim 6 and claim 10.

The browsing device is able to update an association by assigning another hyperlink and a corresponding description to a user direct select action. This changed association is subsequently presented to a user in order to keep the user informed of the present direct select actions corresponding to the present selectable hyperlinks.

Further characteristic features of the present invention are mentioned in the respective appended claims 3, 7, 11 and claims 4, 8, and 12.

The user direct select action may be a predefined keystroke or a predefined or word or phrase. By pressing a certain key or pronouncing a word or phrase, the browser interprets this and subsequently, based on this interpretation selects and activates the associated hyperlink.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a telecommunications network TN coupling a user terminal PC comprising a browsing device BRD to a webserver SE; and
FIG. 2 represents an implementation of the browsing device BRD as incorporated in the user terminal PC as presented in FIG.1;

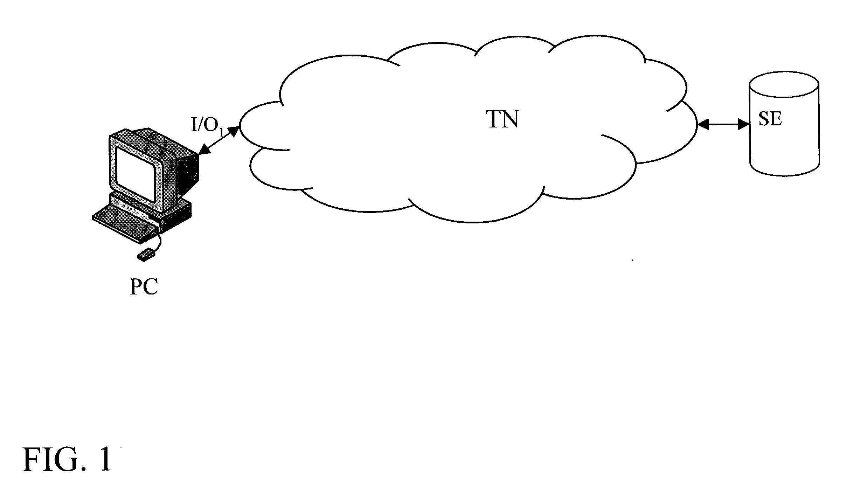

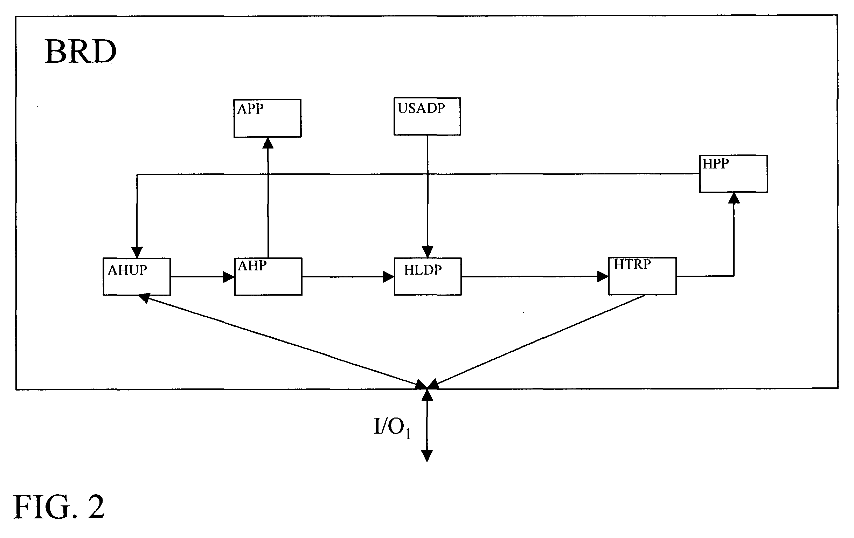

In the following paragraphs, referring to the drawings, an implementation of the devices according to the present invention will be described. In the first paragraph of this description the main elements of this network and the main coupled elements as presented in FIG. 1 are described. Special attention will be drawn to the components of the browsing device BRD as presented in the respective FIG. 2. In the second paragraph, all connections between the before mentioned network elements and described components are defined. In the succeeding paragraph the actual execution of the browsing device is described.

The essential elements of this embodiment of the present invention are a telecommunications network TN constituted by a data network, such as the Internet. Any other communications network can implement this network. Further there is a web server SE that holds certain information by means of hypertext pages. Those pages may be described in specific mark-up languages such as HTML, voice XML, WML or any other XML based language. The hypertext page in its turn may contain a number of hyperlinks, each referring to an Internet resource. Moreover, the Web-server SE makes this information accessible for any user browsing the Internet and searching for specific information. This user is able to retrieve the needed information from the Web-server making use of a user terminal PC. Such a user terminal PC comprises a processor and a program storage device on which software components can be installed. Amongst others an Internet browsing program BRD presently is installed. The user terminal PC in this embodiment is a personal computer further comprising a screen, keyboard and a mouse. In order to keep simplicity in this description it is chosen to only describe one Web-server and one user terminal connected to the telecommunications network TN, although this normally will be a plurality of both Web servers and user-terminals. Both the web-server SE and the user terminal PC are over a Transmission Control Protocol over Internet Protocol, further referred to as a TCP/IP connection and the necessary termination means coupled to the telecommunications network TN.

The browsing device BRD as presented in FIG. 2 is built up of a hypertext retrieving part HTRP, that is able to retrieve a hypertext page from a web-server SE by requesting the server SE for the hypertext page. The browsing device BRD further comprises a hypertext presenting part HPP that is able to present the retrieved hypertext page on the screen of the personal computer PC.

The browsing device BRD additionally includes an association holding part AHP, a table that is adapted to hold for all specific hyperlink of the hypertext page an association of this specific hyperlink together with a corresponding description and a user direct select action. Such a user direct select action is here assumed to be one of twelve function keys F₁ up to F₁₂ of the PC keyboard. Further there is a association presenting part APP, that is adapted to present the corresponding description and the belonging function key of the keyboard, for each specific hyperlink on the screen of the personal computer PC. The browsing device BRD further comprises an association holding updating part AHUP that is adapted to retrieve the relevant associations from a table at the web-server SE (not shown in the Figures), that holds all associations with respect to this hypertext page and to update the associations held in the table of the associations holding part AHP, by assigning another specific hyperlink and corresponding description to said user select action. This table retrieved from the web-server may be described using a XML based mark-up language.

Additionally there is a user direct select action detecting part USADP, that is able to detect the activation of a user direct select action i.e. pressing of one of the function keys and further a hyperlink determination part HLDP, that is adapted to determine the specific hyperlink from the association held in the table of the association holding part based on the activation of said user direct select action i.e. pressing of one of the function keys.

The association holding updating part AHUP is coupled with an output-terminal to an input-terminal of the association holding part AHP and is additionally coupled with an input/output terminal to an input/output I/O₁ of the browsing device Moreover, the association holding updating part AHUP is coupled with an input-terminal to an output-terminal of the hypertext presenting part HPP.

The association holding part AHP additionally has an output-terminal that is at the same time an input-terminal of the association presenting part APP. Additionally the association holding part AHP as an output-terminal that is at the same time an input-terminal of the hyperlink determination part HLDP which in its turn is coupled with an output-terminal that to an input-terminal of the hypertext retrieving part HTRP and with an input-terminal to an output-terminal of the user direct select action detecting part USADP. Further, the hypertext retrieving part HTRP is coupled with an output-terminal to an input-terminal of the hypertext presenting part HPP. The hypertext retrieving part HTRP additionally has an input/output terminal that is at the same time an input/output-terminal I/O₁ of the browsing device.

In order to explain the operation of the present invention it is assumed that the web-server SE holds a hypertext page with for instance 20 hyperlinks each referring to another hypertext page in its turn representing other hyperlinks. The web-server additionally contains a table that corresponds to the hypertext page. This table contains for each of those hyperlinks (20) an association with the hyperlink, a description of the link and the corresponding user direct select action, in case of a personal computer browser, the function keys F1 up to F12. Further it is assumed that a user i.e. the user of user terminal PC wants to browse through those hyperlinks of this hypertext pages using his browsing device. It is also assumed that he has arrived at the Web-server SE and that the hypertext page is displayed on the screen of his personal computer PC.

Then it is assumed that for instance the first twelve hyperlinks are visible on the screen and that the association holding updating part AHUP retrieves these 12 corresponding associations from the web-server table and updates the table of the association holding part AHP that in the end holds for each of the visible hyperlinks (12) an association that consists of the hyperlink itself, a description of the hyperlink, for instance a short title of the referenced hypertext page and the corresponding user direct action, i.e. the function key that is linked with the hyperlink. For instance the first hyperlink is connected with the function key F1, the second hyperlink connected with function key F2 and so on up to the twelfth hyperlink that will be associated to function key F12.

The association presenting part APP displays the content of the table of the association holding means, i.e. all associations of a hyperlinks including the short-title and the dedicated function key, in a small browser window of the personal computer.

As a consequence, the user who wants to select the hyperlink with dedicated function key F5 can do the selection of this hyperlink by pressing function key F5. The selection of function key F5 then is detected by the user direct select action detection part USADP which in its turn forwards the meant selection to the hyperlink determination part HLDP. The hyperlink determination part HLDP then determines the specific hyperlink of the hypertext page wherein the user is interested, by looking in the table of the association holding part AHP for the association that includes the function key F5. As a consequence the fifth hyperlink is found to be associated to this function key and is forwarded to the hypertext retrieving part HTRP. The hypertext retrieving part HTRP then retrieves the information corresponding to the fifth hyperlink from the web-server SE and subsequently hands over the information to the hypertext information presenting part HPP that presents the retrieved hypertext page, i.e. the hypertext page wherein the user is interested on the screen of the personal computer PC.

Further it is assumed that the user further scrolls over the screen, and consequently the last 12 hyperlinks, i.e. hyperlink 8 up to hyperlink 20 are by the browsing device BRD visualised on the screen. The association holding updating part AHUP detects this scrolling over the screen and will retrieve the corresponding associations which are stored in the web-server SE and subsequently update the associations held in the table of the association holding part AHP, by assigning the hyperlinks 8 to 20 together with the short title to the function keys F1 up to F12. The association presenting part APP then shows the new, updated association comprising hyperlink 8 up to hyperlink 20 on the screen of the personal computer to enable the user to select one of these hyperlinks using the function key F1 up to F12 as a hyperlink selection shortcut.

It is to be remarked that instead of the function keys F1 up to F12 in case of a personal computer, the user direct select action in case of a next generation mobile terminal may be implemented by for instance, using the coloured keys (red, blue, yellow, green) and assigning each the keys to one of a set of four hyperlinks. Further it is, for example, possible to select in a hypertext page up to for instance six hyperlinks to an equal number of associated words or phrases in case of a browsing device supporting voice control. The user can traverse the hyperlinks by saying one of the 6 words or pronouncing the corresponding sound.

While the principles of the invention have been described above in connection with specific apparatus, it is to be clearly understood that this description is made only by way of example and not as a limitation on the scope of the invention, as defined in the appended claims.

Although the above embodiments of the invention have been described by means of functional blocks, their detailed realisation based on their functional description should be obvious for a person skilled in the art and is therefore not described.

## Claims

1. Web browsing device, for selecting a specific hyperlink from a set of hyperlinks included in a hyper-document, each hyperlink of said set referring to a web resource, **CHARACTERISED IN THAT** said web browsing device comprises the following parts:
a. association holding part (AHP), adapted to hold for said specific hyperlink an association of said specific hyperlink with a corresponding description and a user direct select action;
b. association presenting part (APP), coupled with an input to an output of said association holding part (AHP) and adapted to present for each said specific hyperlink, said corresponding description and said user direct select action;
c. user direct select action detecting part (USADP), adapted to detect the activation of said user direct select action; and
d. hyperlink determination part (HLDP), coupled with an input to an output of said user direct select action detecting part (USADP) and adapted to determine said specific hyperlink from said association holding part (AHP) based on the detection of said activation of said user direct select action.

2. Web browsing device according to claim 1, **CHARACTERISED IN THAT** said browsing device further comprises an association holding updating part (AHUP), coupled with an output to an input of said association holding part (AHP) and adapted to update said association by assigning another specific hyperlink and corresponding description to said user select action.

3. Web browsing device according to claim 1, **CHARACTERISED IN THAT** said user direct select action is a predefined keystroke.

4. Web browsing device according to claim 1, **CHARACTERISED IN THAT** said user direct select action is a predefined spoken word or phrase.

5. Web browsing method, for selecting a specific hyperlink from a set of hyperlinks, included in a hyper-document, each hyperlink of said set referring to a web resource, **CHARACTERISED IN THAT** said web browsing method comprises the following steps:
a. holding for said specific hyperlink an association of said specific hyperlink with a corresponding description and a user direct select action;
b. presenting for each said specific hyperlink, said corresponding description and said user direct select action;
c. detecting the activation of said user direct select action; and
d. determining said specific hyperlink from said association holding part based on the detection of said activation of said user direct select action.

6. Web browsing method according to claim 5, **CHARACTERISED IN THAT** said browsing method further comprises the step of updating said association by assigning another specific hyperlink and corresponding description to said user direct select action.

7. Web browsing method according to claim 5, **CHARACTERISED IN THAT** said user direct select action is a predefined keystroke.

8. Web browsing device according to claim 5, **CHARACTERISED IN THAT** said user direct select action is a predefined spoken word or phrase.

9. Software module, for running on a processing system for inclusion in a web browsing device to select a specific hyperlink from a set of hyperlinks, included in a hyper-document, each hyperlink of said set referring to a web resource, **CHARACTERISED IN THAT** said software module comprises the following software sub-modules:
a. association holding sub-module, adapted to hold for said specific hyperlink an association of said specific hyperlink with a corresponding description and a user direct select action;
b. association presenting sub-module, co-operating with said association holding sub-module and adapted to present for each said specific hyperlink, said corresponding description and said user direct select action;
c. user direct select action detecting sub-module, adapted to detect the activation of said user direct select action; and
d. hyperlink determination sub-module, co-operating said user direct select action detecting sub-module and adapted to determine said specific hyperlink from said association holding sub-module based on the detection said activation of said user direct select action.

10. Software module according to claim 9, **CHARACTERISED IN THAT** software module further comprises an association holding updating sub-module, co-operating with said association holding sub-module and adapted to update said association by assigning another specific hyperlink and corresponding description to said user select action.

11. Software module according to claim 9, **CHARACTERISED IN THAT** said user direct select action is a predefined keystroke.

12. Software module according to claim 9, **CHARACTERISED IN THAT** said user direct select action is a predefined spoken word or phrase.
